# EUROPEAN PATENT APPLICATION

(11) **EP 2 525 125 A1**
(43) Date of publication of application: **21.11.2012**
(21) Application number: 11166763.0
(22) Date of filing: 19.05.2011
(51) Int. Cl.: F16L 27/08, F24J 2/46

(54) **High temperature axial seal and method**

(71) Applicant: Huhnseal AB, 261 23 Landskrona (SE)
(72) Inventor: Anderberg, Göran, 261 61, Landskrona (SE); Ficorilli, Daniele, 25224 Helsingborg (SE)
(74) Representative: KIPA AB

(57) **Abstract**

A high temperature seal assembly (100, 300) for sealing a rotatable pipe (101) is provided. The rotatable pipe having an inner void (102) for transportation of high temperature medium therein, an axial direction (103), and a radial direction (104), the seal assembly comprising a swivel joint (105) having two axially opposing annular sliding surfaces (106, 107) belonging to first and second pipe ends (108, 109) aligned in the axial direction, the first and second pipe ends being rotatable with respect to each other, a first and second casing part (113, 114) being fixed to the first and second pipe ends respectively, wherein the first and second casing parts form an annular void (1105, 1205) enclosing the pipe ends, and a gas inlet (1102, 1202) arranged to supply a gas to the void in use of the seal assembly such that the atmosphere surrounding the pipe ends in the void comprise a concentration of said gas.

## Description

### Field of the Invention

This invention pertains in general to the field of axial seals, sealing methods with such seals and systems where such seals are applied. More particularly the invention relates to a seal assembly for sealing a rotatable pipe used for transportation of a high temperature medium.

### Background of the Invention

In the German published patent application no. DE 44 17 994, a rotational tube joint for high temperatures is described. The joint comprises to co-axially arranged pipe ends with intermediate inner and outer elastomeric sealing rings, and a radial gap in-between the rings that is a sliding bearing. In DE 44 17 994 it is mentioned that the disclosed joint is suitable for use up to 220°C. The elastomeric sealing material is not suitable for higher temperatures. Further, due to the arrangement of the elastomeric sealing units, the joint is only suitable for use with low pressures of a few bar. In addition, the joint seal would not be suitable for a medium that is solid at the maximum operating temperature mentioned above. In particular, the joint is not suitable for use with salt as a medium to be transported in the joined pipes.

In international patent publication number Wo2007/146183A2 examples and variations of apparatus and methods for concentrating solar radiation are disclosed. A working fluid, such as water, an oil, glycol, is heated by solar rays and used to drive a turbine for power generation. Temperatures mentioned are not exceeding 287°C (550°F). Moreover, there is no consideration of thermal expansion of segments of solar collecting units and related issues in pipe systems and in particular sealing assemblies thereof.

In recent solar collector applications a heat transportation medium is heated to much higher temperatures at the focus point of incoming solar rays to increase efficiency of the solar heat collection, such as exceeding 500°C. Salt, such as NaCl or KCl or mixtures thereof, which are still in solid phase at the temperatures mentioned in DE 4417 994 and Wo2007/146183A2 is typically used as a heat transfer medium suitable for such high temperatures. The salt is liquid at the operating temperatures, such as exceeding 500°C. The heated liquid medium is transported in pipe sections at the focus point before led to heat up water in a heat exchanger, e.g. for generating electrical energy. In order to increase efficiency further, the pipe sections follows the range of movement of the solar collector during the course of the day, where the rotational movement together with the considerable temperatures put large strains, both mechanical and thermal, on the sealing elements at the rotating pipe sections.

Previously, such as disclosed in Wo2007/146183A2, oil has been commonly used as a heat transportation medium in above application. The relatively low temperature of the heated oil results however in a too low steam pressure of the heated water for obtaining a good energy efficiency using a turbine to convert the energy of the steam. Salt is heated to higher temperatures by the solar rays, and a steam pressure is produceable that provides greatly improved energy efficiency.

The increased temperatures render however existing sealing solutions, such as disclosed in DE 44 17 994 obsolete.

Moreover, common swivel joints utilizing carbon elements for sealing do not have the chemical resistance to comply with the salt at the high temperature and will degrade over time, leading to unwanted leakage.

Common solutions utilizing steel bellows trying to avoid leaking joints, experience considerable mechanical fatigue due to the repeated rotational movements of the solar collector, including movements due to expansion of the heated pipe sections, and will also degrade over time. Other issues arise as salt solidifies when not heated exceeding a temperature over approx. 200 degC where it liquefies.

In addition, the weight of the pipe sections at the focus point of the solar collector puts large requirements on the mechanical stability of the seals.

Moreover, previous seals commonly experience quick degradation of opposing sliding faces due to the high temperatures and high pressures associated with transportation of fluids such as molten salt, e.g. at 550 degC and 20 bar, and the oxidizing atmosphere. Such degradation will cause leakage. A further issue with previous seals is insufficient flexibility of the seal, at the cost of the efforts to make the seal more durable. Additional issues are associated with large temperature variations, causing thermal expansion of different extents between different materials in the seal, leading to undesired strains.

Hence an improved seal assembly, and/or method, providing sealing of a rotatable pipe used for transportation of a high temperature medium would be advantageous.

### Summary of the Invention

Accordingly, embodiments of the present invention preferably seek to mitigate, alleviate or eliminate one or more deficiencies, disadvantages or issues in the art, such as the above-identified, singly or in any combination by providing an assembly and method that prolongs the lifetime of a seal assembly, according to the appended patent claims.

The seal assembly comprises a swivel joint having two axially opposing annular sliding surfaces of two pipe ends. In some embodiments, the assembly comprises a radially positioned heat insulating shield radially arranged between the radially inner arranged pipe ends section and a radially outer bearing, preferably a ball bearing. The heat insulating shield unit extends axially along the pipe ends section, preferably in a larger axial extension than radial extension.

According to a first aspect of the invention, a seal assembly for sealing a rotatable pipe is provided, the rotatable pipe having an inner void for transportation of high temperature medium therein, an axial direction, and a radial direction, the seal assembly comprising a swivel joint having two axially opposing annular sliding surfaces belonging to first and second pipe ends aligned in the axial direction, the first and second pipe ends being rotatable with respect to each other, a first and second casing part being fixed to the first and second pipe ends respectively, wherein the first and second casing parts form an annular void enclosing the pipe ends, and a gas inlet arranged to supply a gas to the void in use of the seal assembly such that the atmosphere surrounding the pipe ends in the void comprise a concentration of said gas.

According to a second aspect of the invention a method for sealing a rotatable pipe with a seal assembly is provided, the pipe having an inner void for transportation of high temperature medium therein, the method comprising providing sealing by means of a joint, such as a swivel joint, having two axially opposing annular sliding surfaces belonging to first and second pipe ends being rotatable with respect to each other, said first and second pipe ends being fixed to first and second casing parts forming an annular void enclosing the pipe ends, and supplying a gas to the void in a concentration such that the atmosphere surrounding the pipe ends is non-corrosive.

A swivel joint is a coupling or union allowing two parts of the joint rotating or turning independently of each other.

Further embodiments of the invention are defined in the dependent claims, wherein features for the second and subsequent aspects of the invention are as for the first aspect mutatis mutandis.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

These and other aspects, features and advantages of which embodiments of the invention are capable of will be apparent and elucidated from the following description of embodiments of the present invention, reference being made to the accompanying drawings, in which
Fig. 1 is a side view of a seal assembly according to an embodiment of the present invention;
Fig. 2 is a schematic view of a system of seal assemblies for a solar collector unit according to an embodiment of the present invention;
Fig. 3 is a side view of a seal assembly according to an embodiment of the present invention;
Fig. 4 is a perspective view of a part of the seal assembly according Fig. 3;
Fig. 5 is a perspective view of a detail of the seal assembly according Fig. 4;
Fig. 6 is a perspective view of the seal assembly according Fig. 3;
Fig. 6b is a side view of a detail of the seal assembly according Fig. 3 or 6;
Figs. 7a-c are perspective views of a detail of the seal assembly according Fig. 4;
Figs. 8a-d are perspective views of a part of the seal assembly according Fig. 3;
Fig. 9 is a schematic illustration of a method according to an embodiment of the invention; and
Fig. 10 is a schematic illustration of a method according to an embodiment of the invention.
Fig. 11 is a side view of a detail of the seal assembly in Fig. 3 according to an embodiment of the invention;
Fig. 12 is a side view of a detail of the seal assembly in Fig. 1 according to an embodiment of the invention;
Fig. 13 is a schematic illustration of a method according to an embodiment of the invention.

### Description of embodiments

Specific embodiments of the invention will now be described with reference to the accompanying drawings. This invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the embodiments illustrated in the accompanying drawings is not intended to be limiting of the invention. In the drawings, like numbers refer to like elements.

The following description focuses on an embodiment of the present invention applicable to a seal assembly for a rotatable pipe used for transportation of a high temperature material. However, it will be appreciated that the invention is not limited to this application but may be applied to many other constructions involving heat shielding or isolation of a rotating shaft.

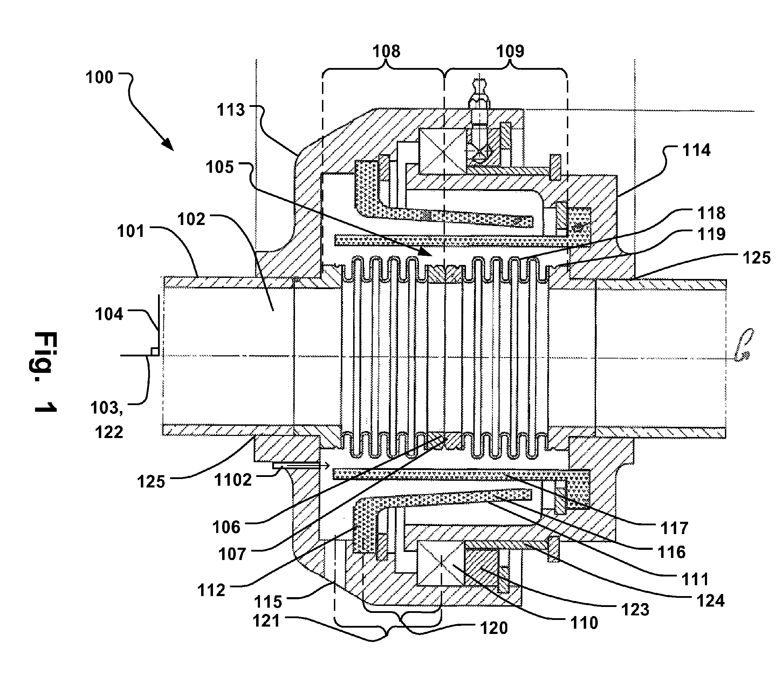

In Fig. 1, a seal assembly 100 according to an embodiment of the invention is shown in a side view. The seal assembly is for sealing a rotatable pipe 101 having an inner void 102 where a high temperature medium is statically present or transported in either direction of the pipe 101. An axial direction 103 and a radial direction 104 of the pipe 101 are shown. The axial direction 103 is parallel to the rotational axis 122 of the pipe 101, and the radial direction 104 is perpendicular to the axial direction 103. The seal assembly comprises a swivel joint 105 where a first sliding surface 106 of a first pipe end 108 meet with a second sliding surface 107 of a second pipe end 109.

The swivel joint 105 is a sealing unit to prevent leakage of medium from the inner void 102 to the outside of the pipe 101. The sealing effect is provided while rotation of the first and second pipe end relative each other is allowed. This rotational movement is preferably very slow, such as 180 degrees in approximately 12 hours. A rotation back to the initial position may be made quicker. This is in particular applicable to solar collector units described in detail below.

The first 108 and second 109 pipe ends of the pipe 101 are aligned in the axial direction 103 and are rotatable with respect to each other. The opposing sliding surfaces 106 and 107 are annular in shape and are in contact with each other. The degree of contact may vary, such that the full sliding surface 106 may be in contact with the full sliding surface 107. Alternatively only a portion of the sliding surfaces 106 and 107 may be in contact, or the sliding surfaces 106 and 107 may be separated by a distance thereby having no contact, providing sufficient sealing. However, in normal operation they are in contact. The seal assembly 101 comprises a bearing 110 arranged in the radial direction 104 and having its rotational axis aligned in the axial direction 103 for supporting a slidable or a smooth rotational movement between the pipe ends 108 and 109. The bearing 110 may be accompanied in some embodiments with additional bearings (not shown) for providing the rotational movement between the pipe ends 108 and 109 and for carrying radial load e.g. due to the weight of the pipe 101 and medium therein.

Bearing 110 is preferably a ball bearing. Bearing 110 may in some embodiments be a sliding bearing.

A heat insulating shield 111 unit or element is thus positioned radially between the sliding surfaces 106, 107, and the bearing 110 to protect the bearing 110 from the heated medium, or heat thereof, in the void 102 that extends in the pipe 101 through the opposing pipe ends 108 and 109. The heated medium may be pressurized to elevated pressures. Some embodiments of the assembly are operated at approximately 20 bars internal pressure of the liquid high temperature medium in the inner void 102. A small portion of the high temperature medium in the void 102 may pass between the sliding surfaces 106 and 107 depending on the degree of contact between these two surfaces. In case this should happen, even if it should primarily be avoided by the sealing unit, the heat insulating shield 111 is arranged to physically stop the heated material from reaching the bearing 110. This may occur e.g. due to an undesired leakage due to wear of the sealing or excessive pressure of the heated medium.

Radiated heat from the heated medium, while present in the void 102 or released from the sliding surfaces 106 and 107, is also blocked by the insulating shield 111.

The temperature of the heated medium is in some embodiments in the range 500-600 degC, or above.

The heat insulating shield 111 provides thermal isolation, whereby the energy efficiency of the seal assembly 100 is improved. The heat energy of the high temperature medium in the inner void 102 is kept inside the joint and not lost at the position of the joint.

A bearing 110 has as much lower allowable operational temperature, which was not an issue previously when oil was commonly used as the heat transportation medium. The heat shield 111 extends axially across the bearing and is radially arranged as e.g. shown in Fig. 1. Extending substantially in the axial direction may be construed as the heat shield 111 has a larger axial than radial extension. In more detail, the heat insulating shield 111 is arranged to extend in the axial direction 103 such that it may cover at least the axial extent of the bearing 110. Alternatively, or in addition, the heat insulating shield 111 may extend to cover any portion of the pipe ends 108, 109, or pipe 101. The axial extent of the bearing 110 is to be construed as the projection of the dimensions of the bearing 110 on the axial direction 103. A larger coverage in the axial direction 103 by the heat insulating shield 111 may improve the shielding of the bearing 110 from heated medium and radiant heat thereof. The heat insulating shield 111 may preferably be arranged to cover the axial portion at which the sliding surfaces 106 and 107 are present for effectively blocking heated medium released from the sliding surfaces 106 and 107 if subsequently spreading in the radial direction 104.

Now, the bearing unit 110 is operable at much lower temperatures as the liquid high temperature medium in the inner void 102 thanks to the heat shield unit 111 arranged radially between the two units.

The heat insulating shield 111 may be arranged along the axial and radial direction, with respect to its position or dimensions, to minimize the exposure of heated material to the bearing 110.

The heat insulating shield 111 may have a continuous annular shape, for shielding the bearing 110. Alternatively, or in addition, it may be arch shaped, defining a circle sector of any degree. A continuous annular shape may provide the most efficient shielding of the bearing 110.

The heat insulating shield 111 may have a radial shield portion 112 extending substantially in the radial direction 104. The radial shield portion 112 may have an axial displacement 120 from the bearing 110, such that the radial shield portion 112 has a different axial position than the bearing 110. High temperature medium, or radiant heat thereof, propagating in the radial direction 104 are accordingly blocked from spreading in the axial direction 103 by the radial shield portion 112. Spreading of heated medium in the axial direction 103 towards the bearing 110 may be prevented as the radial shield portion 112 has an axial displacement 120 in relation to the bearing 110. A larger amount of axial displacement 120 may improve the amount of shielding as the distance between the heated medium and the bearing increase 110. The radial shield portion 112 may be arranged along the axial and radial direction, with respect to its position or dimensions, to minimize the exposure of heated material to the bearing 110.

The heat insulating shield 111 that extends substantially in the axial direction 103 may be aligned at an angle towards the axial direction 103 such that any heated medium, if passed through the swivel joint 105, and blocked by the heat insulating shield 111, is diverted towards the radially outside arranged shield portion 112, e.g. under the influence of gravitational force, or pressure of the propagating heated medium. Further axial propagation of the heated material, for example towards the bearing 110, is thus controlled and blocked by the radial shield portion 112. The heat insulating shield 111 extending substantially in the axial direction 103 may have a continuous transition to the radial shield portion 112, as in the embodiment in Fig. 1, or discontinuous in the event the radial shield portion 112 constitutes a heating shield separate from the heating shield 111. A continuous transition may improve the shielding of the bearing 110.

The seal assembly 100 comprises a first casing part 113 fixed to the first pipe end 108, and a second casing part 114 fixed to the second pipe end 109. The casing parts 113 and 114 may be welded at welding points 125, which may be annular welding points in order to follow the annular border between the pipe 101 and the casing parts, 113 and 114. The welding points provide necessary sealing in order to avoid the use of elastic or elastomeric seals. Some embodiments of the sealing assembly 100 are thus completely free of seals made of elastic or elastomeric materials, such as polymer or rubber materials. This is in particular advantageous from a point of temperature and/or corrosion leading to increased live of the assembly.

The bearing 110 joins the casing parts 113 and 114 along the annular periphery at a radial distance, such that the slidable motion between the pipe ends 108 and 109 is obtained. Due to the heat insulating shield 111, the bearing may be arranged relatively close to the pipe 101, without being subjected to temperatures that may be damage the bearing 111. A compact seal assembly is thereby provided. The bearing is for instance radially arranged at a maximum of twice the pipe diameter. Further, due to the position of the bearing 111 at the periphery of the pipe 101 it is capable of bearing a high load.. A torque, e.g. due to the weight of the pipe and medium therein, is thus advantageously bearable by a single bearing 110.

The casing parts 113 and 114 may have continuous annular shapes defining an enclosure of the pipe ends 108 and 109 when joined by the bearing 110. The heat insulation shield 111 and radial shield portion 112 may be fixed to any one of the casing parts 113 and 114, as long as the rotational movement between the casing parts 113, 114 and subsequently the pipe ends 108, 109 is possible.

One of the casing parts 113 and 114 may be provided with an opening 115 for diverting released high temperature medium, or radiant heat thereof, to a medium surrounding the seal assembly 100, or to a reservoir attached to the opening. Damage to the bearing 110 may thereby be prevented, as no build up of heated medium occurs in the seal assembly. The opening may be provided with a filter in order to avoid unwanted particles entering the interior of the seal assembly construction. Several openings 115 may be provided in one, or both, of the casing parts 113 and 114. The opening 115 may be directed vertically, downwards at the assembly, with respect to the gravitational force in order for the escaped heated medium to be released to the surroundings by its own weight.

The heat insulation shield 111 or radial shield portion 112 may be arranged in the axial and radial directions 103 and 104 to divert the heated medium to the at least one opening 115, for example by arranging the radial shield portion 112 to the opening 115 such that heated medium may transition from the radial shield portion 112 to the opening 115. In such instance the surface of the radial shield portion 112 may be substantially flush to the edge to the opening 115, or having an offset in the axial direction 103. In both instances the radial shield portion 112 may be fixed to one of the casing parts 113, 114, to prevent heated medium from propagating in the radial direction 104 before being diverted to the opening 115. The opening 115 may be utilized for arranging active cooling of the seal assembly 100, for example by introducing a cooling medium through the opening 115, whereby the heat insulating shield 111, bearing 110, and the pipe ends 108, 109 may expel heat to the cooling medium. The cooling medium would transport the heat to the surroundings by exiting at an opening 115.

The opening 115 may be positioned at a distance from the bearing by having a second axial displacement 121 in relation to the bearing 110, where the second axial displacement 121 may be larger than the axial displacement 120 of the radial shield portion 112 for diverting the heated medium further away from the bearing 110.

In the embodiment in Fig. 1 the heat insulating shield 111 comprises a first shield 116 and a second insulating shield 117 unit or element. In the particular embodiment the first shield 116 comprises the radial shield portion 112 as previously referred to. The first shield 116 is in a fixed position in relation to the first pipe end 108, and the second shield 117 is in a fixed position in relation to the second pipe end 109, whereby the second shield 117 is rotatable with respect to the first shield 116. Each of the shields 116 and 117 are extending substantially in the axial direction 103 and may have a continuous annular shape. Possible arrangements of the heat insulating shield 111 discussed above apply to each of the first and second shields 116 and 117. Further, each of the first and second shields 116 and 117 may comprise a radial shield portion 112. In Fig. 1 the first shield 116 is fixed in the first casing part 113, and the second shield 117 is fixed in the second casing part 114, the casing parts 113 and 114 in turn being fixed to the pipe ends 108 and 109, respectively. Having two shields may improve the shielding of the bearing 110 from the heated medium. Also the insulation of the pipe ends 108 and 109 may be improved, decreasing a loss of heat, and thereby increasing the energy efficiency of the seal assembly 100. Several more heat insulation shields may be used in the seal assembly 100. The plurality of heat insulating shields may thus form a labyrinth or maze diverting any escaped heated medium away from the bearing 110.

In Fig. 1 the first shield 116 is displaced in the radial direction 104 with respect to the second shield 117. The amount of displacement may be varied, for example such that contact is provided between the first and second shields 116, 117. Alternatively no contact is provided, thereby having complete clearance between the shields 116 and 117. The axial extent of the first shield 116 may overlap with the axial extent of the second shield 117 as in Fig. 1. The amount of overlap of said axial extent between the shields 116 and 117 may be varied. When the shields 116 and 117 overlap, heated medium or radiant heat thereof, propagating in the radial direction 104, are blocked by both shields 116 and 117, which may improve the shielding of the bearing 110. Further, the thermal isolation may be improved, minimizing heat loss from the seal assembly 100 to the surroundings.

Each of the pipe ends 108 and 109 may comprise a section of resilient pipe end having a flexible pipe wall 118 extending in the axial direction 103. The flexible pipe wall is a corrugated section. The section forms thus a bellows like portion.

In Fig. 1 the flexible pipe wall 118 extends between the second sliding surface 107 and a rigid pipe wall 119 of the second pipe end 109. The first pipe end 107 is comprised likewise. The flexible pipe wall 118 provides for a range of movement of the second pipe end 109 in the axial direction 103 and the radial direction 104, whereby the rotational axis 122 of the first pipe end 108 may be displaced from that of the second pipe end 109, while contact between the sliding surfaces 106 and 107 is maintained. A higher tolerance against movements of the pipe ends 108 and 109 is thus achieved. Temperature differences due to the presence of heated medium in the void 102 may induce expanding and contracting motions in the material of the pipe 101 and pipe ends 108, 109, such that displacement of each rotational axis occurs. The flexible pipe wall 118 may be comprised of any material of high temperature resistance allowing for flexible movement, such as flexible steel of high temperature resistance. High temperature resistance means that the flexible pipe wall 118 has a melting point that is much higher than the operating temperature of the high temperature medium in the void 102. Additionally, the material is to be corrosive resistant, in particular against salt, which is a very corrosion aggressive material. A suitable range of materials is including Inconel® described below. The flexible pipe wall 118 may be arranged in any shape to allow resilient or flexible movement. The shape is for instance bellow shaped, according to the embodiment illustrated in Fig. 1.

The flexible pipe wall 118 may be resiliently compressible in the axial direction 103, whereby a greater range of displacement may be provided between the rotational axis 122 of the first pipe end 108 and the rotational axis of the second pipe end 109, while contact between the sliding surfaces 106 and 107 is advantageously maintained thanks to the resilient compression. A higher pressure of sliding surface 106 against sliding surface 107 may also be provided by adjusting the resilient force exerted by a compressed flexible pipe wall 118.

In Fig. 1 the bearing is positioned in the radial direction outside of the sliding surfaces 106 and 107, such that the bearing 110 is centered at the same axial position as the sliding surfaces 106 and 107. The centered alignment may improve the mechanical stability of the seal assembly. The bearing 110 has a first fixing element 123 and a second fixing element 124, for locking the bearing 110 to the first and second casing parts, 113 and 114, respectively. The spacing 125 between the bearing fixing elements 123 and 124 is small enough to stop unwanted particles, such as sand grains, from reaching the bearing 110, and large enough to avoid unnecessary friction between the fixing elements 123 and 124. This is particularly advantageous in operating conditions in deserts, where solar collector applications are thus advantageously operated with such sealing assemblies 100.

Further, the bearing 110 is positioned at a distance in the radial direction 104 from the sliding surfaces 106 and 107. The reduced spacing between said sliding surfaces 106 and 107 and the bearing 110 provides for a stronger construction of the seal assembly 100, due to a decrease in momentum force at the bearing 110. This provides for a compact, self supporting seal assembly 100, capable of receiving large mechanical load. The bearing 110 may be placed close to the periphery of the radial extent of the casing parts 113 and 114.

The high temperature medium, also referred to as heated medium above, which is present in the void 102 is preferably a liquefiable solid, such as salt. The high temperature medium may have a liquid temperature at which it transitions from a solid to a liquid, such as 200 degC. The seal assembly according to the present invention is operable below and above the liquid temperature. In case the heated medium is salt, and the pipe 101 is heated by solar rays in a solar collector application, the salt may reach temperatures in the excess of 550 degC. In normal operation the heat insulating shield 111 provides sufficient isolation from the surroundings such that the heated medium maintains a temperature above its liquid temperature, even though the heat of the sun does not heat the salt.

The pressure of the heated medium in the void 102 of the pipe 101 may be sufficient to transport the heated medium in the pipe 101 at a desired speed in the axial direction 103. For example in case the heated medium is salt, the pressure may be approximately 18 bar.

Embodiments of the seal assembly work very well with said high temperature medium and at said temperatures and pressures.

The heat insulating shield 111, radial shield portion 112, and/or first shield 116 and second shield 117 may be made from a ceramic, such as aluminum oxide, or any other material capable of withstanding high temperature in the excess of 550 degC. The material may provide one or more of a physical barrier to the heated medium, being a solid or liquid, or to some extent gaseous, and a barrier towards heat radiated from such medium.

The sliding surfaces 106 and 107 may be of a material comprising or consisting of stainless steel. A particularly suitable material is e.g. Inconel®. Inconel® refers to a family of austenitic nickel-chromium-based alloys available from Special Metals Corporation. The sliding surface is made of materials that are oxidation and corrosion resistant materials suited for operation in extreme conditions.

At least one, preferably both of the sliding surfaces 106 and 107 may be coated with a friction reducing material, such as aluminum oxide, or any other material capable of reducing the friction between two sliding surfaces. The coating of the friction reducing material may be provided by plasma coating. Alternatively, or in addition, a sliding element such as an annular sliding washer may be positioned between the sliding surfaces 106 and 107. The sliding washer may be made of silicon carbide, or another high resistance material. Reducing the friction prevents wear of the sliding surfaces 106 and 107.

The seal assembly 100 may comprise two sliding washers or rings of silicon carbide, where each may be held against the sliding surfaces 106, 107, such that the rings slide against each other, but not against the surfaces 106, 107. This provides an efficient seal with minimal wear on the sliding surfaces 106, 107, while the high resistant materials of the rings withstand an excessive amount of sliding revolutions without being worn down.

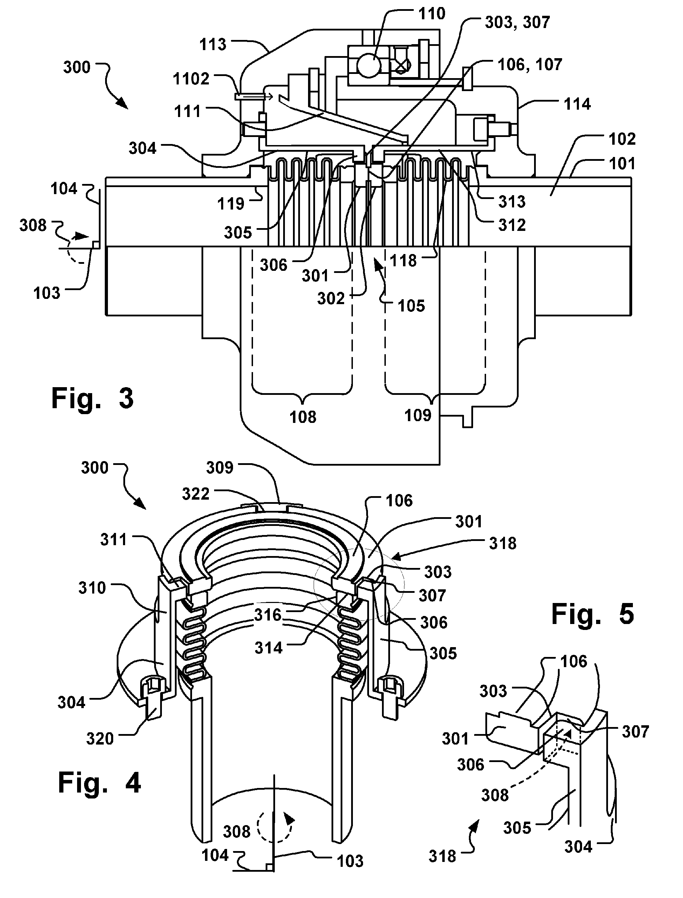

The rings or annular sliding members may be held against the sliding surfaces 106, 107, with a guiding member 305, 312, as described with reference to Figs. 3-8. Moreover, by avoiding attaching the rings to the pipe ends having sliding surfaces 106, 107, various materials may be used. The material may be different materials having different thermal expansion coefficients, without causing strain at the interface between the different materials.

The pipe 101, pipe ends 18 and 108, the flexible pipe wall 118, and casing parts 113 and 114, may be made of steel, such as high temperature resistant steel or any other material capable of withstanding high temperature in the excess of 500 degC. Stainless steel may be used to withstand salt as heated medium.

The pipe 101 and/or the opposing pipe may be supplied with one or more heating elements (not shown). Alternatively, or in addition, the flexible pipe wall may be provided with or as a heating element. The heating element(s) are preferably arranged radially inside the heat insulating shield. In this manner, the medium in the pipe is heatable by the heating unit. The heat insulating shield provides that the heat generated by the heating element is directable to the pipe and the medium therein. An electrical current may be provided through the heating elements to provide the thermal energy needed. The heating element(s) may for instance be activated to heat the heating medium to liquefy in the inner void 102. This may for instance be needed upon re-start after service, to re-start circulation of the heating medium that has solidified at low temperatures, e.g. in the solar system described below.

In Fig. 3, a seal assembly 300 according to an embodiment of the invention is shown in a side view.

The main components of the seal assembly 300 such as pipe 101, inner void 102, axial direction 103, radial direction 104, swivel joint 105, sliding surfaces 106, 107, first and second pipe ends 108, 109, and first and second casing parts 113, 114, are the same as described for the seal assembly 100 in Fig. 1.

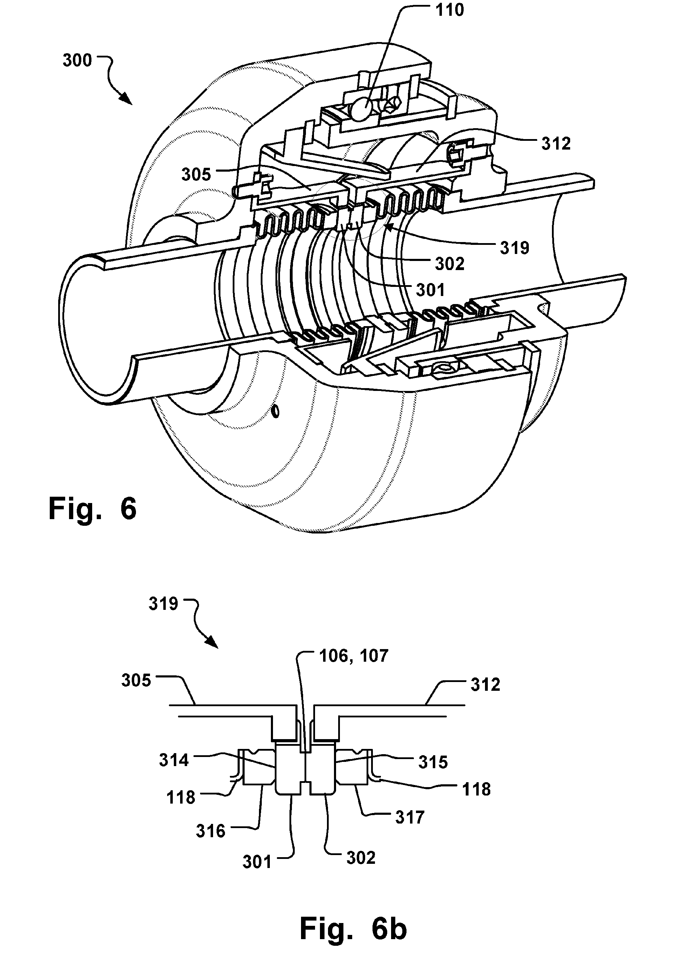

The seal assembly 300 comprises at least one annular sliding member 301, 302, comprising one of the opposing annular sliding surfaces 106, 107, and a peripheral opening 303, shown in more detail in Figs. 4 and 5. In Fig. 3 two annular sliding members 301, 302, are shown. Sliding member 301 has sliding surface 106 in sliding contact with sliding surface 107 of the sliding member 302, also shown in Fig. 6b. Fig. 6 is a perspective view of the seal assembly 300 according to Fig. 3, and Fig. 6b is a detail view of a region 319 as indicated in Fig. 6.

The seal assembly 300 comprises at least one driving sleeve 304, 313, which is fixed at one end to one of the first and second casing parts 113,114. In Fig. 3 the driving sleeve 304 is fixed to the first casing part 113 by attachment means 320, shown in Fig. 4, and vice versa for the driving sleeve 313, being fixed to the second casing part 114.

Fig. 4 is a perspective view of the left half of the seal assembly in Fig. 3, including first pipe end 108, driving sleeve 304, and the first annular sliding member 301. The at least one driving sleeve 304, 313, comprises a guiding member 305, 312, and is fixed to the latter. The guiding member 305, 312, is in mating and slidable contact with the peripheral opening 303, as shown in more detail in Fig. 5.

As shown in Fig. 5, which is an enlarged portion of the area 318 indicated in Fig. 4, a contact surface 306 on the guiding member 305 is arranged to exert a force on a side wall 307 of the opening 303 in a direction of rotation 308 (dashed arrow in Figs. 3-5) of the at least one annular sliding member 301. The rigid driving sleeve 304 and guiding member 305 will consequently decrease the torque exerted on the pipe end 108 upon rotation of the pipe end 108, including the annular sliding member 301, in relation to the second pipe end 109. The torque is caused by the frictional force between the sliding surfaces 106 and 107. The torque will be transferred to the driving sleeve 304 and guiding member 305. Consequently, the pipe end 108 may be advantageously resilient to maintain a flexible connection with pipe end 109, and a tight seal at sliding surfaces 16, 107, while maintaining a rigid configuration in the direction of rotation 308, i.e. relieved from torque and being prevented from twisting motion that may cause excessive wear.

The guiding member 305 is slidable through the opening 303 in the axial direction 103. Hence, the annular sliding member 301 may move in relation to the driving sleeve 304 and guiding member 305 in the axial direction 103. Also, the guiding member 305 is slidable through the opening 303 in the radial direction 104, so the annular sliding member 301 is moveable in relation to the driving sleeve 304 in the radial direction 104.

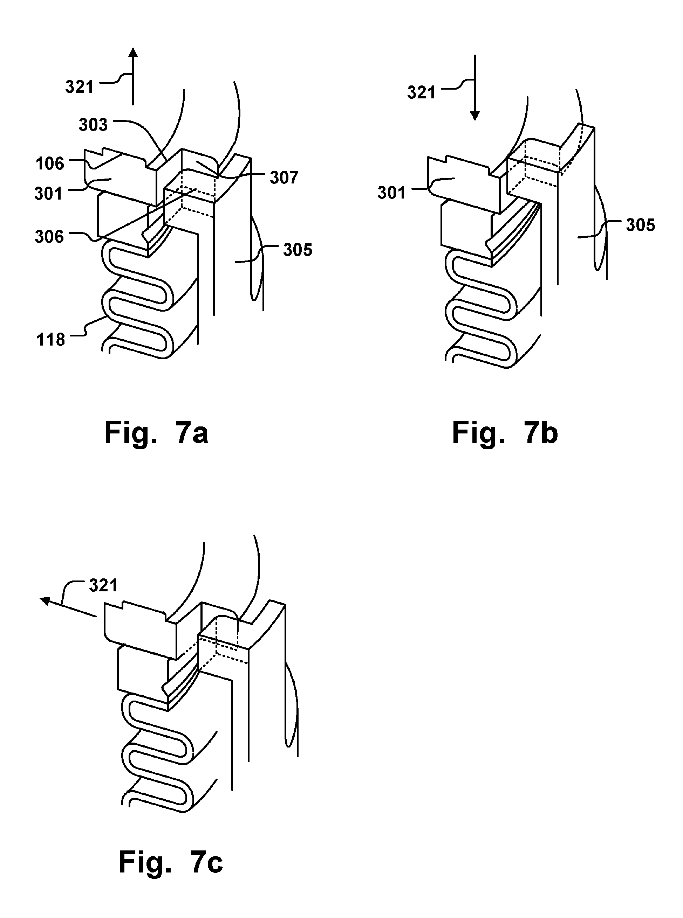

This is shown in more detail in Figs. 7a-c, where the annular sliding member 301 displaced in relation to the guiding member 305 in the direction of the arrow 321.

Axial movement is shown in Fig. 7a-b, and radial movement is shown in Fig.7c.

During the displacement, contact between sliding surface 106 and the corresponding sliding surface 107 (excluded from the figure for clarity of presentation) is maintained. Further, contact between a side wall 307 of the opening 303 and contact surface 306 of the guiding member 305 may be maintained in order to direct torque exerted on the annular sliding member 301 to the guiding member 305. The dimensions of the contact surface is such that aforementioned contact may be maintained in any direction of movement of the annular sliding member 301, as seen in Figs. 7a-c.

Although details are only shown for the pipe end 108, the seal assembly 300 may have a similar construction at the second pipe end 109, as shown in Figs. 3 and 6.

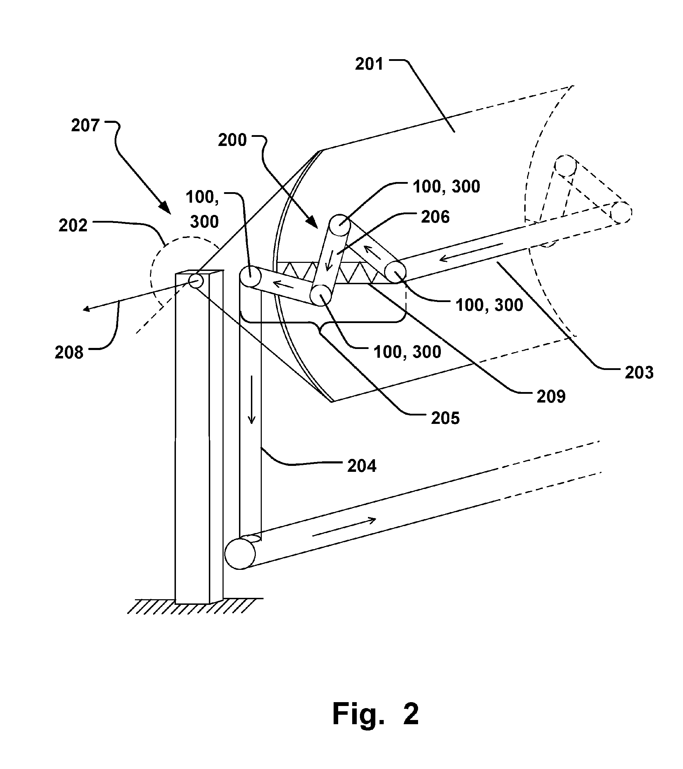

The pipe ends 108, 109, may be comprised of a resilient material. At least one of the pipe ends 108, 109, may be comprised of a flexible pipe wall 118 extending in the axial direction 103 between the at least one annular sliding member 301, 302, and a rigid pipe wall 119 of one of the first and second pipe ends 108, 109. As described in relation to Fig. 2, the flexible pipe wall 118 provides for a range of movement of the second pipe end 109 in the axial and radial directions 103, 104, whereby the rotational axis of the first pipe end 108 may be displaced from that of the second pipe end 109, while contact between the sliding surfaces 106 and 107 is maintained. A higher tolerance against movements of the pipe ends 108 and 109 is thus achieved. As elucidated above, the guiding members 312 may maintain contact with the annular sliding members 301, 303, during such flexible movement for relieving the flexible pipe wall 118, or bellows, from torsion stress.

The seal assembly 300 in Fig. 3 comprises a first annular sliding member 301 having a peripheral opening 303 in contact with a first guiding member 305 of a first driving sleeve 304, and a second annular sliding member 302 comprising a peripheral opening in contact with a second guiding member 312 of a second driving sleeve 313. The first and second annular sliding members 301, 302, are in sliding contact at the sliding surfaces 106, 107.

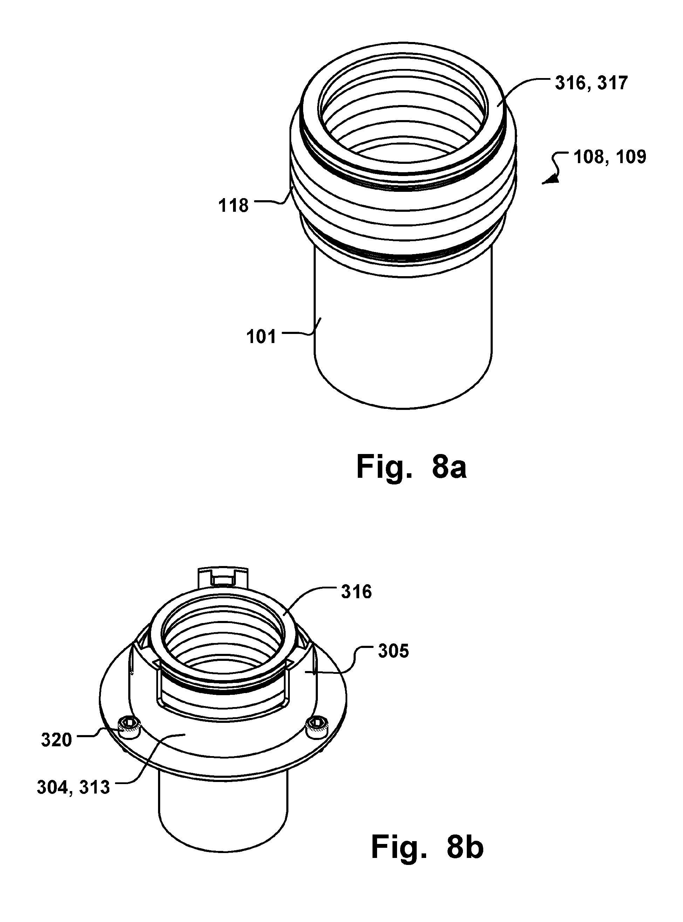

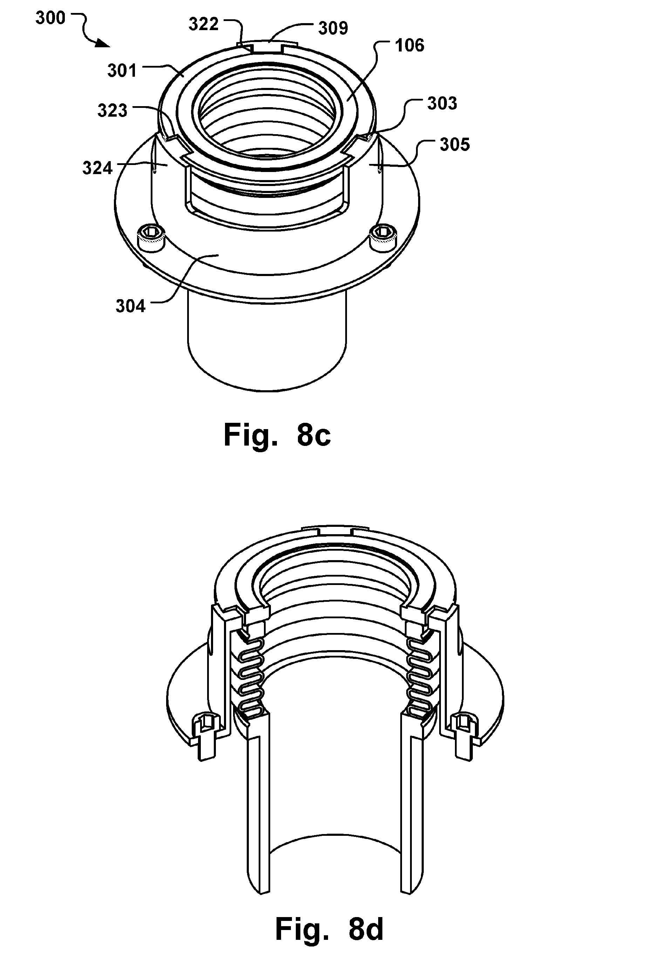

Each of the driving sleeves 304, 313, may comprise a plurality of guiding members 305, 309, as shown in Figs. 4 and 8 for driving sleeve 304, each in mating and slidable contact with a corresponding opening 303, 322, of the corresponding annular sliding member 301. By having several guiding members the annular sliding members 301, 302, may be positioned more accurately against each other. This is particularly advantageous when the annular sliding members comprise removable rings 301, 302, as described further below.

In Figs. 3-8 the guiding member 305 comprises a first member 310 extending from the driving sleeve 304 substantially in the axial direction 103 to annular sliding member 301, and likewise for the guiding member 312 of the second driving sleeve 313. The guiding member 305 further comprises a second member 311 extending substantially perpendicular from the first member 310 in the radial direction 104, as shown e.g. in Fig. 4. The second member 311 comprises the contact surface 306. The peripheral opening 303 may be a slot 303 open in the radial direction 104 having a side wall 307 and being arranged to engage the second member 311. The contact surface 306 is arranged to slide against the side wall 307 to allow movement as described in relation to Figs. 7a-c. The guiding member 312 at the second pipe end 109, as well as a plurality of guiding members 305, 309, may comprise corresponding first and second members 310, 311. This may provide for a compact and efficient configuration of the seal assembly 300. In addition, the at least one driving sleeve 304, 313, and guiding member 305, 312, may function advantageously in addition as an integrated insulation unit of the pipe ends, and/or function as integral protective heat shields being arranged in the longitudinal direction of the pipe ends 108, 109, as described further below.

Other configurations may be possible, for example, the first member 310 of the guiding member 305, 312, may extend in the radial direction 104. The opening 303 may have any shape while engaging with the guiding member 305, 312.

The first and second casing parts may be joined by at least one bearing 110 for providing slidable rotational movement between the first and second pipe ends 108, 109. The bearing 110 may be positioned at the periphery in the radial direction of the pipe 101. The seal assembly 300 may in addition or alternatively comprise a separate or additional heat insulating shield 111 that is radially positioned between the guiding member and the at least one bearing and extending substantially in the axial direction 103. The advantages with the heat insulating shield have been described previously with reference to Fig. 1. The heat insulating shield 111 may protect the bearing 110 or other components from heat radiation from the pipe ends 108, 109, and/or from heated material managing to escape between the sliding surfaces 106, 107. Moreover, the configuration and arrangement of the heat insulating shield 111 in the seal assembly 300 of Fig. 3 may correspond to that seal assembly 100 in Fig. 1.

In addition, or alternatively, the at least one driving sleeve 304, 313, and/or guiding member 305, 312, may comprise a heat insulating shield. Hence, the driving sleeve 304, 313, and/or guiding member 305, 312, may at least partly be made of a heat resistive or heat insulating material, such as a ceramic, or a wear resistive material like silicon carbide. Alternatively, at least a portion may be made of a corrosion resistive material, including a metal alloy such as Inconel®. Certain portions or sections of the one driving sleeve 304, 313, and/or guiding member 305, 312, may be made of different materials as the skilled person will realize when reading the present disclosure.

The at least one annular sliding member 301, 302, may comprise silicon carbide, or another ceramic or another wear resistant material. High resistance to wear is thereby achieved.

Moreover, the at least one annular sliding member 301, 302, may comprise a removable ring 301, 302, in abutment with one of the first and second pipe ends 108, 109. The ring may be replaced upon wear. In Fig. 3, the seal assembly 300 has two rings 301, 302, in abutment with each of the corresponding pipe ends 108, 109. The ring 301 is provided with the peripheral openings 303, 322, and vice versa for the second ring 302. The rings 301, 302 are guided and held into place, at least rotationally, by guiding members 305, 312. Hence, the rings 301, 302, do not have to be fixed to the pipe ends 108, 109. This opens for a wide selection of material combinations, as the material of the rings 301, 302, does not have to be compatible with the material of the pipe ends 108, 109, for joining together, as elucidated further below. Moreover, this allows the materials may have different thermal expansion coefficients while avoiding thermally induced stresses in the interface of the materials.

As mentioned above, several guiding members 305, 309 may be provided on each driving sleeve 304, 313, for guiding the rings 301, 302. The rings 301, 302, have sliding surfaces 106, 107, in sealing contact between each other during rotational movement 308. The ring 301 (and correspondingly second ring 302) may slide in the radial 104 and axial directions 108 in relation to the guiding member 305, 309, while keeping sealing contact between sliding surfaces 106, 107, due the sliding contact between opening 303 and guiding member 305, as described in relation to Figs. 7a-c.

One of said first and second pipe ends may comprise a sealing member 316, 317, arranged for sealing against the removable ring 301, 302. In Fig. 6b, a first sealing member 316, is fixed to a flexible wall 118 of the first pipe end 108, and a second sealing member 317, is fixed to a flexible wall 118 of the second pipe end 109. The sealing members may be welded to the flexible wall 118, or attached by other means for a tight seal. Each of the sealing members 316, 317, forms a tight seal against the rings 301, 302. The seal assembly 300 described with reference to Figs. 3-8 is shown with the annular sliding members 301, 302, being comprised of rings that are in abutment with the sealing members 316, 317. In other embodiments (not shown) the annular sliding member 301 may be fixed to the first pipe end 108, or sealing member 316, or flexible pipe wall 118, and vice versa for the second annular sliding member 302, being fixed to the second pipe end 109. The above mentioned advantages associated with the driving sleeve 304, 313, and guiding member 305, 312, e.g. removing torsion stress from pipe ends 108, 109, while maintaining flexibility, also applies to such embodiment having the annular sliding members 301, 302, fixed to the respective pipe ends 108, 109.

In Figs. 3-8 the annular sliding members 301, 302, are separated from the sealing members 316, 317, hence being comprised of rings 301, 302.

As seen in Fig. 5, the first guiding member 305 may exert a force on the ring 301 in the direction of rotation 308 upon a rotational movement of the first pipe end 108, and vice versa for the second guiding member 312. As the first guiding member 305 is fixed to the first pipe end 108 via driving sleeve 304, the angular velocity of the ring 301 corresponds substantially to the angular velocity of the first pipe end 108. There is accordingly no relative movement between the first pipe end 108 and the ring 301, which prevents wear. Correspondingly the second ring 302 is driven by second guiding member 312 in the opposite direction of rotation of the second pipe end 109. The only movement experienced by the rings 301, 302, is the sliding movement at sliding surfaces 106, 107. Hence there is no wear between the first ring 301 and the first sealing member 316.

Each of the first and second removable rings 301, 302, may comprise silicon carbide or another wear resistant material. The thickness of the silicon carbide rings is suitable for providing a good sliding function with the guiding member 305, 312, and sufficient to withstand prolonged use as a sliding member in the seal assembly 300 without wear or damages. Upon rotation of the pipe ends 108, 109, in opposite directions, the sliding surfaces 106, 107, of silicon carbide slides against each other, while there is no rotational movement between the first ring 301 of silicon carbide and the first pipe end 108, or first sealing member 316.

The first and second sealing members 316, 317, may be made of a metal alloy, for being easily welded to the flexible pipe wall 118. As there is no rotational movement between the first sealing member 316 and the silicon carbide ring 301, the first sealing member 316 does not experience any wear although being made of a softer material, such as metal, compared to the ceramic ring 301 of silicon carbide. The surface of the sealing member 316 thus remains flat, and interface between the sealing member 316 and sealing ring 301 provides for a tight seal even at high temperatures and pressures. Hence, the minimal wear minimizes leaks and the durability of the seal assembly 300 is improved. The common problem of wear due to high pressures and temperatures of the material within the pipe 101 is thus resolved.

No fixing measures of the silicon carbide rings 301, 302, to the metal sealing members 316, 317, are required as the rings 301, 302, are guided and held into place by the guiding members 305, 312, as described above. There is therefore no issue of thermal stresses due to different thermal expansion coefficients, as the seal assembly may be subjected to vast temperature variations from several degrees below 0 degC to over 550 degC in use.

Hence, as seen in Fig. 6b, each of the first and second removable rings 301, 302, may comprise a static face 314, 315, on the opposite side to each of the sliding surfaces 106, 107. The static faces are in abutment with the sealing members 316, 317, and are being prevented from rotational movement in relation to the sealing members 316, 317, by the first and second guiding members 305, 312, respectively. The static faces 314, 315, provide sealing between sealing members 316, 317, when being comprised of a metal alloy, and the silicon carbide rings 301, 302.

It is possible to vary the geometry of the rings 301, 302, in order to increase the axial load of the static contact faces 314, 315, without increasing the load of the dynamic faces at the sliding surfaces 106, 107. Having rings 301, 302, with varying geometries is thus efficient when there is a need to increase the hydraulic load at the static faces 314, 315, to be able to minimize any leakage on that part, but at the same time avoid an increase in the axial load at the dynamic faces 106, 107, because this may also increase the friction force and thereby the wear on the rings 301, 302.

An embodiment is shown in Fig. 2, showing a perspective view of a system 200 comprising at least two seal assemblies 100 in a solar collector unit 207. In the embodiment in Fig. 2 four seal assemblies 100 are shown. The solar collector unit 207 comprises a moveable collector 201 for rotation in an angular interval 202 around a rotational axis 208 of the collector 201.

The rotation of the collector follows the path of the sun during the day. A receiver tube 203, which is fixed in relation to the collector 201 by a fixing beam 209, is moveable in relation to a transportation tube 204 by rotation about the rotational axis 208, in the angular interval 202. The fixing beam 209 positions the receiver tube 203 in the focus point of the collector 201, independent of the current angle in the angular interval 202 of the collector. The receiver tube 203 is accordingly maintained in the focus point of the collector during the day. The linkage pipe 205 comprises at least one pipe segment 206 and joins the receiver tube 203 and the transportation tube 204.

At least two seal assemblies 100 seal the pipe ends of the at least one pipe segment 206 to the receiver tube 203 and the transportation tube 204. In the embodiment illustrated in Fig. 2 four seal assemblies 100 seal the pipe ends of three pipe segments 206 to the receiver tube 203 and transportation tube 204. The pipe ends at the end points of the linkage pipe 205 are sealed by seal assemblies 100 to the receiver tube 203 and transportation tube 204, respectively. Whereas the pipe ends of the intermediate pipe segments 206 are sealed to each other by the seal assemblies 100.

The collector 201 focus the solar rays on the receiver tube 203 whereby the heat transportation medium inside the receiver tube 203, for example salt, is heated and transported through the pipe segments 205 to the transportation tube 204. Hence a circulation of the heated medium between the receiver tube 203 and the transportation tube 204 is obtained as the collector 201 rotates in the angular interval 202. The seal assemblies 100 provide the necessary range of movement for the receiver tube 203 to follow the rotating motion of the collector 201 tracing the sun for obtaining maximum efficiency. In addition, the seal assemblies 100 provide a sufficient range of movement in a direction parallel to the rotational axis 208, when heat cause the material of the receiver tube 203 to expand in said direction. A large number of receiver tubes 203 may be connected to each other in a serial connection when many collectors 201 are lined up in collector arrays. The expansion of such serial connection in the direction parallel to the rotational axis 208 may for instance be 0.5 m for every 100 m of serially connected receiver tubes 203. The seal assemblies 100 and the pipe segments 206 are joined such that the expansion is efficiently translated to a rotating motion between the pipe segments 206 without inducing any strain in the linkage pipe 205. Four seal assemblies 100 may be sufficient to account for both the rotational movement in the angular interval 202 and said expansion movement. Less than four seal assemblies may also be sufficient for providing a sufficient range of movement in certain operating conditions.

Hence, in an embodiment, the solar collector unit comprises a moveable collector 201 for rotation at an angle 202, a moveable receiver tube 203, a fixed transportation tube 204, the receiver tube being rotated with respect to the transportation tube in said angular interval. The seal assembly is arranged in a linkage pipe 205 joining the receiver tube and transportation tube. The linkage pipe comprises at least one pipe segment 206. The seal assembly is arranged for sealing the pipe ends of the at least one pipe segment to the receiver tube and the transportation tube. A circulation of a heated medium between the receiver tube and the transportation tube is obtainable during rotation in said angular interval. The solar collector unit comprises at least one sealing assembly as described in embodiments herein.

The solar collector unit may comprise a plurality of said sealing assemblies. The plurality of sealing assemblies are arranged to compensate for thermal caused longitudinal expansion and retraction movements in said solar connector unit while allowing for a rotational movement for following a path of the sun, and circulation of a high temperature medium inside the receiver tube, linkage pipe, sealing assembly and transportation tube.

The linkage pipe comprises only straight tube segments interconnected to each other by a sealing assembly respectively. The linkage pipe comprises no flexible tube segments. There is no mechanical wear in the tubes themselves except to possible corrosion.

In a method of compensating for thermal caused longitudinal expansion and retraction movements the solar connector unit is provided. In the method a rotational movement is provided as well as circulation of a high temperature medium inside the receiver tube, linkage pipe, sealing assembly and transportation tube of said solar collector unit.

Fig. 8a shows the first or second pipe end 108, 109, of the pipe 101, having a flexible wall 118 fixed to a portion of the pipe end 108, 109, and a sealing member 116, 117, fixed to the flexible wall 118. Fig. 8b shows the first or second driving sleeve 304, 313, applied to the pipe end 108, 109. For clarity of presentation, the casing parts 113, 114, being fixed with attachment means 320 to the first and second driving sleeves 304, 313, have been omitted in Fig. 8b.

In Fig. 8c a ring 301, 302, of silicon carbide, or another wear resistant material, has been applied on top of the sealing member 116, 117, which may be of a metal alloy. The ring 301, 302, has three openings or slots 303, 322, 323, which engages the top part, or second member 311 with reference to Fig. 4, of the guiding members 305, 309, 324. The number of slots or guiding members selected from any suitable number, such as 1, 2, 3, 4, 5, 10, 20, 50 etc., depending on the size of the ring 301 and specific application of the seal assembly. A distribution of slots or guiding members along the perimeter of the ring 301, 302 allows for transferring a symmetrical rotational load without creating deformations in the ring due to the rotational torque evenly applied along the perimeter. Fig. 8d shows a perspective view with a section of the part of the seal assembly 300 in Fig. 8c cut out, and corresponds to Fig. 4.

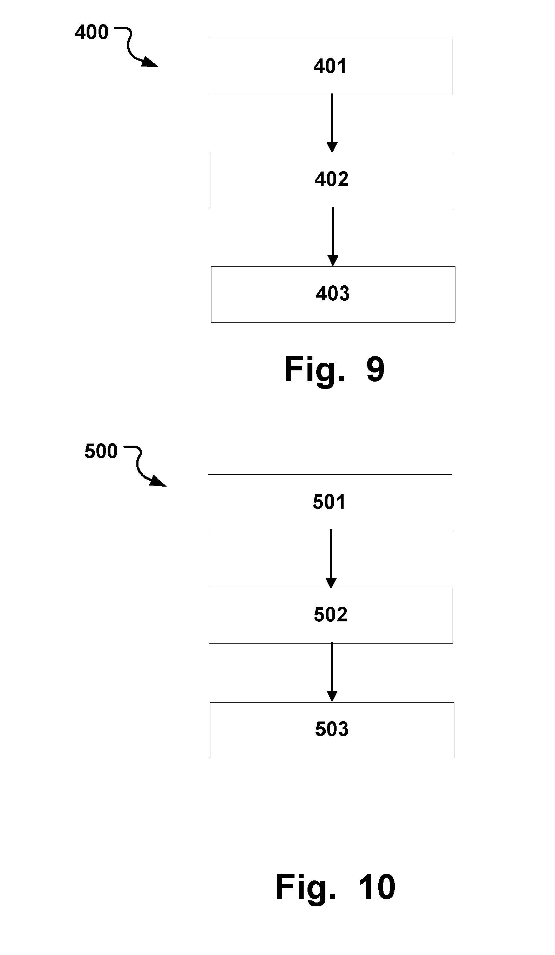

Fig. 9 shows a method 400 of sealing a rotatable pipe 101 with a seal assembly 100, where the pipe 101 has an inner void 102 for transportation of high temperature medium therein, an axial direction 103, and a radial direction 104. The method 400 comprises providing 401 sealing by means of a swivel joint 105 having two axially opposing annular sliding surfaces 106, 107, the first sliding surface 106 belonging to a first pipe end 108 aligned in the axial direction and the second sliding surface 107 belonging to a second pipe end 109 aligned in the axial direction. The first and second pipe ends are rotatable with respect to each other.

The method 400 comprising further providing 402 slidable movement by means of at least one bearing 110 being axially aligned between the first and second pipe ends, where the bearing is positioned at the periphery in the radial direction of the pipe. The method 400 comprises further providing 403 insulation by means of a heat insulating shield 111 being radially positioned between the sliding surfaces and the at least one bearing and extending substantially in the axial direction, thereby shielding the bearing from the high temperature medium and/or heat thereof.

Fig. 10 shows a method 500 of sealing a rotatable pipe 101 with a seal assembly 300, the pipe having an inner void 102 for transportation of high temperature medium therein, and an axial direction 103. The method 500 comprises providing 501 a swivel joint 105 having two axially opposing annular sliding surfaces 106, 107, belonging to first and second pipe ends 108, 109, aligned in the axial direction 103, the first and second pipe ends being fixed to first and second casing part 113, 114 respectively, and the first and second pipe ends being rotatable with respect to each other.

The method 500 comprises further sealing 502 the swivel joint with at least one annular sliding member 301, 302, comprising one of the opposing annular sliding surfaces 106, 107, and a peripheral opening 303. The method 500 comprises further guiding 503 the at least one annular sliding member by at least one driving sleeve 304, 313, being fixed at one end to one of the first and second casing parts 113, 114. The at least one driving sleeve comprises and is fixed to a guiding member 305, 312, in mating and slidable contact with the peripheral opening 303, whereby a contact surface 306 on the guiding member is arranged to exert a force on a side wall 307 of the opening 303 in a direction of rotation 308 of the at least one annular sliding member 301, 302.

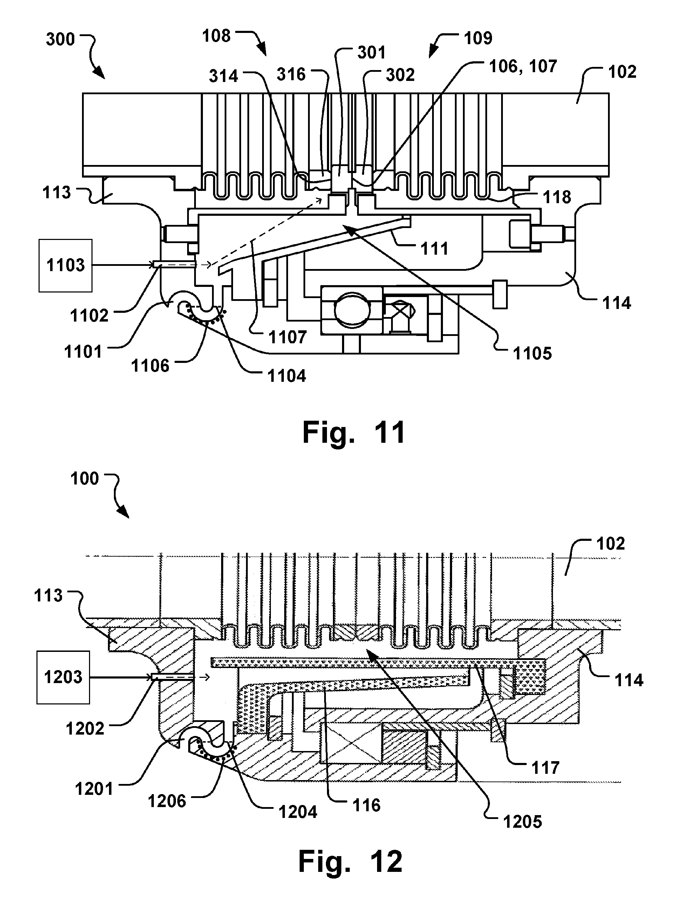

Fig. 11 shows a detail of the seal assembly 300 in Fig. 3. The first and second casing parts 113, 114, form an annular void 1105 enclosing the pipe ends 108, 109. The pipe ends 108, 109, being enclosed by the void 1105 is to be construed as there is a defined space/void 1105 in the radially outward direction from the pipe ends 108, 109, and there is a possible exchange of any gaseous, liquid or solid matter between any parts of the pipe ends 108, 109, including any opposing surfaces such as the sliding surfaces 106, 107, or static faces 314, 315 (described in relation to Fig. 6b), and the atmosphere of the void 1105, and vice versa. The gas inlet may be positioned anywhere in one of the casing parts 113, 114, for fluid communication with the void 1105.

A gas inlet 1102 is arranged to supply a gas to the void 1105 in use of the seal assembly 300 such that the atmosphere surrounding the pipe ends 108, 109, in the void 1105 comprise a concentration of said gas. The gas supplied to the void 1105 is thereby allowed to interact with the sliding surfaces 106, 107, and the static faces 314, 315. In this manner the concentration of gaseous substances in the void 1105, being in contact with aforementioned surfaces/faces, may optimized to minimize degradation of the surfaces/faces and improved the lifespan of the material. In particular, oxygen may cause corrosion, e.g. at the static faces 314, 315. By supplying a gas that displaces oxygen from these faces the corrosion can be avoided. The corrosion may lead to formation of particles that cause unnecessary wear at the faces 314, 315, which could compromise the sealing ability. The supplied gas may be any gas that removes oxygen from the void 1105, such as Nitrogen gas. Any other gas being non-reactive to the surfaces may be used, such as Argon or other inert gases. In high temperature applications the gas is suitably non-flammable. By having a gaseous atmosphere in the void 1105 free of oxygen, or having the oxygen concentration below a critical concentration, corrosion and formation of particles causing wear is efficiently avoided, e.g. when having two opposing surfaces of different material. I.e. the seal assembly 300 may have the annular sliding members 301, 302, of silicon carbide facing sealing members 316, 317 (see detailed view in Fig. 6b) of a metal alloy at the static face 314. Gas supplied through inlet 1102 will propagate as indicated by dashed line 1107 to the face 314 and remove or lower the concentration of oxygen to prevent wear at face 314.

The seal assembly 300 may comprise a control unit 1103 adapted to supply the gas to the void 1105 in a set concentration and time interval. The control unit 1103 is thereby adapted to set the concentration such that oxygen is displaced from the pipe ends 106, 107, by said gas. The control unit 1103 may have an integrated sensor that allows the concentration of e.g. Nitrogen to be kept at a set value in the void 1105. Hence, the gas may be supplied to the void 1105 in a certain time interval and quantity to maintain the desired concentration and thereby protection against corrosive oxygen in an automated manner.

At least one of the casing parts 113, 114, may be provided with at least one opening 1101 for diverting any released high temperature medium to the medium surrounding the seal assembly 300. The opening may be curve-shaped, such as S-shaped, for retaining a portion of the high temperature medium to block propagation of the gas in the void to the medium surrounding the seal assembly 300. By retaining a portion of the high temperature medium in the opening 1101, such that the medium occupies the entire cross-section of the opening 1101, gaseous substance such as Nitrogen gas is unable to escape and is maintained in the void 1105. A more efficient corrosive protection is thereby achieved, requiring less amount of protective gas, while maintaining the function to dispense high temperature medium to the surroundings if released from the sliding faces 106, 107. As the supplied gas is maintained in the void 1105 there is no release of gaseous matter to the surroundings, hence safety is improved in case of using a gas that is not desired to release to the surroundings.

The opening 1101 is curved such that the matter is collected in a recess of the curved opening. Due to the curvature the collection of matter in the recess may raise to a level 1104, see Fig. 11, such that the full cross-section of the opening 1101 becomes occupied with the matter. A further raise in the level of retained matter cause eventually the level to exceed the part of the curvature being open to the surroundings, and the matter can be expelled from the opening 1101. As seen in Fig. 11, the matter is first retained in a portion of the curvature being convex radially outwards closest to the inlet of the opening 1101 to the void 1105. The level 1104 may eventually exceed the apex of the curvature, here being S-shaped, i.e. the portion of the curvature being concave radially outwards closest to the outlet of the opening 1101, such that the matter can be released.

The opening 1101 may comprise a heater coil 1106 arranged adjacent to the opening 1101 for heating the retained medium when solid to liquefy the medium. Medium that has solidified in the opening can thereby be made liquid again, and dispensed to the surroundings, e.g. in case the rate of leakage is sufficiently low to allow solidification of the medium.

Fig. 12 shows a detail of the seal assembly 100 in Fig. 1. The corresponding features as discussed above in relation to Fig. 11 have been indicated in Fig. 12. I.e. gas inlet 1202, control unit 1203, opening 1201 and heating coil 1206.

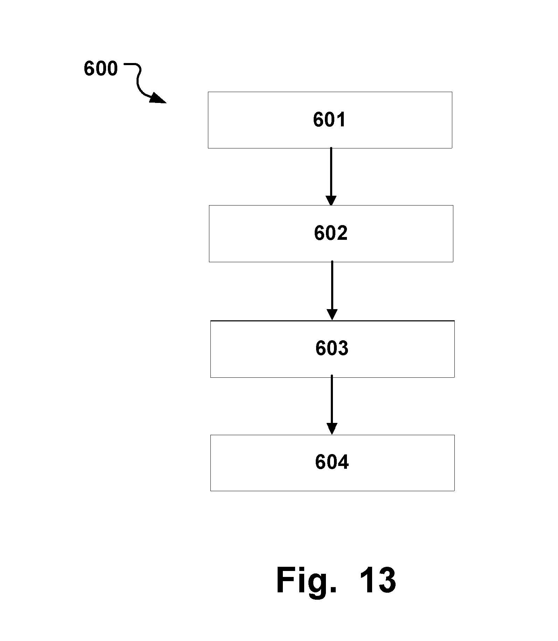

Fig. 13 illustrates a method 600 of sealing a rotatable pipe 101 with a seal assembly 100, 300, the pipe having an inner void 102 for transportation of high temperature medium therein. The comprises providing 601 sealing by means of a swivel joint 105 having two axially opposing annular sliding surfaces 106, 107, belonging to first and second pipe ends 108, 109, being rotatable with respect to each other, the first and second pipe ends being fixed to first and second casing parts 113, 114, forming an annular void 1105, 1205, enclosing the pipe ends 106, 107, and supplying 602 a gas to said void 1105, 1205, in a concentration such that the atmosphere surrounding the pipe ends 106, 107, is non-corrosive.

Providing sealing may further comprise sealing 603 the swivel joint with a at least one removable ring 301, 302, of silicon carbide or another wear resistant material, the at least one removable ring comprising one of the opposing annular sliding surfaces 106, 107, and a peripheral opening 303, and guiding 604 the at least one ring by at least one driving sleeve 304, 313, being fixed at one end to one of the first and second casing parts 113, 114. The at least one driving sleeve comprising and being fixed to a guiding member 305, 312, in mating and slidable contact with the peripheral opening 303, whereby a contact surface 306 on the guiding member is arranged to exert a force on a side wall 307 of the opening 303 in a direction of rotation 308) of the at least one ring 301, 302.

As will be appreciated by one of skill in the art, the present invention may be embodied as device, system, or method.

The present invention has been described above with reference to specific embodiments. However, other embodiments than the above described are equally possible within the scope of the invention. Different method steps than those described above, may be provided within the scope of the invention. The different features and steps of the invention may be combined in other combinations than those described. The scope of the invention is only limited by the appended patent claims.

## Claims

1. A high temperature seal assembly (100, 300) for sealing a rotatable pipe (101), the rotatable pipe having an inner void (102) for transportation of high temperature medium therein, an axial direction (103), and a radial direction (104), the seal assembly comprising
a swivel joint (105) having two axially opposing annular sliding surfaces (106, 107) belonging to first and second pipe ends (108, 109) aligned in the axial direction, the first and second pipe ends being rotatable with respect to each other,
a first and second casing part (113, 114) being fixed to said first and second pipe ends respectively, wherein said first and second casing parts form an annular void (1105, 1205) enclosing said pipe ends,
a gas inlet (1102, 1202) arranged to supply a gas to said void in use of said seal assembly such that the atmosphere surrounding said pipe ends in said void comprise a concentration of said gas.

2. The seal assembly (100, 300) according to claim 1, comprising a control unit (1103, 1203) adapted to supply said gas to said void in a set concentration and time interval, wherein said control unit is adapted to set said concentration such that oxygen is displaced from said pipe ends by said gas.

3. The seal assembly (100, 300) according to claim 1 or 2, wherein at least one of said casing parts are provided with at least one opening (1101, 1201) for diverting any released high temperature medium to the medium surrounding the seal assembly, wherein said opening is curve-shaped for retaining a portion of said high temperature medium to block propagation of said gas to said medium surrounding the seal assembly.

4. The seal assembly (100, 300) according to claim 3, comprising a heater coil (1106, 1206) arranged adjacent to said at least one opening (1101, 1201) for heating said portion of retained medium when solid to liquefy the medium.

5. The seal assembly (100, 300) according to any of claims 14, comprising
at least one annular sliding member (301, 302) comprising one of said opposing annular sliding sealing surfaces (106, 107) and a peripheral opening (303),
at least one driving sleeve (304) being fixed at one end to one of said first and second casing parts (113, 114), said at least one driving sleeve comprising and being fixed to a guiding member (305) in mating and slidable contact with said opening, whereby a contact surface (306) on said guiding member is arranged to exert a force on a side wall (307) of said opening in a direction of rotation (308) of said at least one annular sliding member.

6. The seal assembly (300) according to claim5, comprising
a first annular sliding member (301) comprising a peripheral opening in contact with a first guiding member (305) of a first driving sleeve (304),
a second annular sliding member (302) comprising a peripheral opening in contact with a second guiding member (312) of a second driving sleeve (313),
said first and second annular sliding members being in sliding contact at said sliding surfaces (106, 107).

7. The seal assembly (300) according to claim 5 or 6, wherein said at least one annular sliding member comprises silicon carbide, or another wear resistant material.

8. The seal assembly (300) according to any of claims 5-7, wherein said at least one annular sliding member comprises a removable ring (301, 302) in abutment with one of said first and second pipe ends.

9. The seal assembly (300) according to claim 8, wherein said guiding member is arranged to exert a force on said removable ring in said direction of rotation (308) upon a rotational movement of one of said first and second pipe ends, whereby the angular velocity of said removable ring corresponds substantially to the angular velocity of one of said first and second pipe ends upon said rotational movement.

10. The seal assembly (300) according to claim 6, wherein each of said first and second annular sliding members comprise a first and second removable ring (301, 302) of silicon carbide or another wear resistant material respectively.

11. The seal assembly (300) according to claim 10, wherein each of said first and second pipe ends comprises a sealing member (316, 317) arranged for sealing against said removable rings (301, 302), wherein each of said first and second removable rings comprise a static face (314, 315) on the opposite side to each of said sliding surfaces (106, 107), said static face being in abutment with said sealing member (316, 317) and being prevented from rotational movement in relation to said sealing member by first and second guiding members respectively, and wherein said gas being in contact with said static face.

12. The seal assembly (300) according to any of claims 1-11, wherein said first and second casing parts are joined by at least one bearing (110) for providing slidable movement between said first and second pipe ends, wherein said bearing is positioned at the periphery in the radial direction of said pipe, said seal assembly comprising a heat insulating shield (111) being radially positioned between said sliding surfaces and the at least one bearing and extending substantially in said axial direction, i.e. a longer axial than radial extension, and/or wherein said seal assembly comprises a heating element for heating the high temperature medium inside the pipe when solid to liquefy the medium.

13. The seal assembly (100, 300) according to claim 12, wherein the heat insulating shield comprises a first shield (116) being in a fixed position in relation to the first pipe end, and a second shield (117) being in a fixed position in relation to the second pipe end, whereby the second shield is rotatable with respect to the first shield, and the first and second shields are extending substantially in the axial direction.

14. The seal assembly (100, 300) according to claim 13, wherein the first shield is displaced in the radial direction with respect to the second shield, and the axial extent of the first shield overlaps with the axial extent of the second shield; and/or wherein each of the first and second pipe ends comprise a resilient pipe end having a flexible pipe wall (118) extending in the axial direction between the each of the first and second sliding surfaces and a rigid pipe wall (119) of each of the first and second pipe ends.

15. A method (600) of sealing a rotatable pipe (101) with a seal assembly (100, 300), said pipe having an inner void (102) for transportation of high temperature medium therein, said method comprising;
providing (601) sealing by means of a swivel joint (105) having two axially opposing annular sliding surfaces (106, 107) belonging to first and second pipe ends (108, 109) being rotatable with respect to each other, said first and second pipe ends being fixed to first and second casing parts (113, 114) forming an annular void (1105, 1205) enclosing said pipe ends,
supplying (602) a gas to said void in a concentration such that the atmosphere surrounding said pipe ends is non-corrosive.

16. The method according to claim 15, wherein providing sealing further comprises;
sealing (603) said swivel joint with a at least one removable ring (301, 302) of silicon carbide or another wear resistant material, said at least one removable ring comprising one of said opposing annular sliding surfaces (106, 107) and a peripheral opening (303),
guiding (604) said at least one ring by at least one driving sleeve (304, 313) being fixed at one end to one of said first and second casing parts (113, 114), said at least one driving sleeve comprising and being fixed to a guiding member (305, 312) in mating and slidable contact with said peripheral opening, whereby a contact surface (306) on said guiding member is arranged to exert a force on a side wall (307) of said opening in a direction of rotation (308) of said at least one ring.
